# EUROPÄISCHE PATENTSCHRIFT

(11) **EP 1 721 779 B1**
(45) Veröffentlichungstag und Bekanntmachung des Hinweises auf die Patenterteilung: **27.06.2012**
(21) Anmeldenummer: 06113864.0
(22) Anmeldetag: 12.05.2006
(51) Int. Cl.: B60N 2/52, B60G 17/052

(54) **Vorrichtung und Verfahren zur Federung eines Fahrzeugsitzes mittels Zusatzvolumina**
Device and method for damping a vehicle seat by means of the additional volume
Dispositif et méthode pour l'amortissement d'un siège de véhicule au moyen du volume additionnel

(30) Priorität: 13.05.2005 DE 102005023088
(43) Veröffentlichungstag der Anmeldung: 15.11.2006
(73) Patentinhaber: GRAMMER AG, 92224 Amberg (DE)
(72) Erfinder: Haller, Erwin, 92262, Birgland (DE)
(74) Vertreter: Hannke, Christian

(56) Entgegenhaltungen:
- EP-A- 1 188 608
- EP-A- 1 468 870
- WO-A-89/12766

## Beschreibung

Die Erfindung betrifft eine Vorrichtung sowie ein Verfahren zur Federung eines Fahrzeugsitzes mittels Zusatzvolumina, insbesondere eines Nutzfahrzeugsitzes mit mindestens einer zwischen einem Sitzteil und einem Unterteil angeordneten Luftfeder zur Höhenverstellung des Sitzteils und einer Steuereinrichtung zur Steuerung der Zu- und Abführung mindestens eines Zusatzvolumens zu oder von der Luftfeder, gemäß den Oberbegriffen der Patentansprüche 1, 3, 8 und 10.

Federungsvorrichtungen für Fahrzeugsitze sind insbesondere für eine Dämpfung einer Höhenauslenkung des Fahrzeugsitzes beim Überfahren von unebenen Fahrbahnoberflächen, wie Schlaglöchern, bekannt. EP 1 188 608 A1 zeigt ein aktives Dämpfungssystem für gefederte Fahrzeugsitze, bei dem zwischen einem Sitzteil und einem mit dem Fahrzeug verbundenen Unterteil neben einer mechanischen flexiblen Verbindungseinrichtung eine pneumatische Entlastungsvorrichtung und ein hydraulisches Stellglied angeordnet sind. Sowohl die pneumatische Entlastungsvorrichtung als auch das hydraulische Stellglied werden als Funktion eines Sitzfehlersignals, welches beispielsweise durch eine ruckartige Höhenverstellung des Sitzteils erzeugt wird, durch eine Steuereinrichtung gesteuert.

Derartige hydraulische Stellglieder erfordern eine Verbindung mit dem Bordnetz des Fahrzeuges, insbesondere eines Nutzfahrzeuges, wie einem Traktor. Eine derartige Verbindung hat zur Folge, dass die Aktion der aktiven Dämpfung des Fahrzeugsitzes von der Funktion des Bordnetzes und insbesondere dessen Parameter abhängig ist, so dass eine Abstimmung der Parameter des Dämpfungssystems auf die Parameter des Bordnetzes und damit eine Anpassung des Systems an das jeweilige Nutzfahrzeug erforderlich ist. Zudem sind derartige Federungsvorrichtungen insofern einfach aufgebaut, als dass das hydraulische Stellglied beim Empfang eines Positionsfehlersignales bezüglich des Fahrzeugsitzes, der mit dem Gewicht eines Fahrers beaufschlagt wird, Luft mittels eines Kompressors zugeführt bekommt und hierdurch ein vergrößertes Luftvolumen zur ausreichenden Dämpfung des Fahrzeugsitzes geschaffen wird. Derartige Federungsvorrichtungen weisen entlang ihrer Höhenverstellung keinen Komfortbereich auf, der sich über einen längeren Abschnitt des Höhenverstellungsweges erstreckt und somit eine gleichmäßige Federung innerhalb dieses Höhenverstellungsbereiches mit den gleichen Rückstellkräften darstellt.

Zudem sind Luftfedern bekannt, die eine linear verlaufende Kraft-Weg-Luftfederkennlinie aufweisen, deren Steigung in Abhängigkeit von der Ausgestaltung der Luftfeder und einem angewandten Zusatzvolumen unterschiedlich ist. In der Regel werden bei derartigen Luftfedern konstant gehaltene Zusatzvolumina verwendet, die als eigentliches Luftvolumen der Luftfeder mit der ein- und ausfahrenden Luftfeder verbunden sind.

Derartige konstant gehaltene Zusatzvolumina haben zur Folge, dass, wenn die Luftfeder mit einer Kraft-Weg-Luftfederkennlinie mit geringer Steigung eingestellt ist, ein Zurückschwingen des Sitzteils in eine mittlere Position der Kraft-Weg-Luftfederkennlinie deshalb nicht möglich ist, da Reibungskräfte innerhalb der gesamten Federungsvorrichtung größer sind als eine Rückstellkraft innerhalb der Kraft-Weg-Luftfederkennlinie.

Andererseits wird bei einer Ausbildung der Federungsvorrichtung derart, dass die Rückstellkraft größer ist - also eine größere Steigung der Luftfederkennlinie eingestellt wird - eine vergleichsweise harte Dämpfung sowohl im mittleren Hubbereich als auch in den Hubendbereichen der Luftfeder erreicht.

Zudem wird bei der Anwendung einer Luftfeder in einem Luftfederkennlinienbereich mit geringer Steigung - dem sogenannten Komfortbereich -, welcher die Zuschaltung eines großen Zusatzvolumens erfordert, ein Erreichen der Endanschläge in Hubendbereichen der Luftfeder bei starken Ein- und Ausfahrbewegungen aufgrund einer starken Unebenheit wahrscheinlich, wodurch ein verminderter Sitzkomfort für den Benutzer des Fahrzeugsitzes entsteht. Die Einstellung eines Komfortbereichs wird bei Luftfedern für Fahrzeugsitze generell aufgrund besserer Übertragungswerte und daraus resultierendem höheren Komfort angestrebt.

Ein derartiger Komfortbereich der Luftfaderkennlinie wird werksseitig bisher derart eingestellt, dass er universell für verschiedene Fahrbahnen und Untergründe mit unterschiedlich starken Unebenheiten einsetzbar ist. Da insbesondere bei Traktoren, welche sich sowohl auf der geteerten Fahrbahn als auch auf einem Feldweg oder sogar auf einem Acker fortbewegen, sehr unterschiedliche Anforderungen an die Optimierung der Federungsvorrichtung bzw. eines Federungssystems des Traktorenfahrzeugsitzes gestellt sind, kann ein anfangs eingestellter universeller Komfortbereich lediglich ein Kompromiss für eine effektive Federung des Fahrzeugsitzes in unterschiedlichem Gelände sein

EP 1 468 870 A1 die den Oberbegriff der Ansprüche 1, 3, 8 und 10 entspricht beschreibt eine Vorrichtung, bei der mittels einer Steuereinrichtung bei einer wählbaren Ein- und/oder Ausfahrposition der Luftfeder das zu- oder abführbare Zusatzvolumen derart veränderbar oder abschaltbar ist, dass die Steigungen des Verlaufs einer Krafl-Weg-Lufllederkennlinie, der Luftfeder, in einem ersten und mindestens einem weiterem Bereich unterschiedlich zueinander sind. Ferner geht aus dieser Druckschrift hervor, dass das Zusatavolumen in mindestens einem weiteren Bereich geringer als im ersten Bereich, nämlich einem Komfortbereich ist Dadurch wird eine Federkrafterhöhung bei Überschreiten der Einfahrposltlon der Luftfeder erreicht, welche die Luftfeder schnell ausfahren lässt und den Benutzer des Fahrzeugsitzes wieder in die mittige Position innerhalb des ersten Bereichs der Kennlinie zurückführt.

WO 89/12766 A1 zeigt eine Vorrichtung mit zuschaltbarem Zusatzvolumen, das mittels einer Verschiusseinrichtung der Luftfeder zu- und abschaltbar ist. Zudem ist offenbart, dass das Zusatzvolumen beim Einfedern zunächst abgeschaltet wird, um einen Anstieg des Druckes innerhalb der Luftfeder zu erhalten. Das Zusatzvolumen wird nach dem Erreichen des Todpunktes oder kurz danach wieder zugeschaltet, um eine Anhebung des Fahrzeuges zu reduzieren.

Demzufolge liegt der vorliegenden Erfindung die Aufgabe zugrunde, eine Federungsvorrichtung für einen Fahrzeugsitz zur Verfügung zu stellen, die einen erhöhten Fahrkomfort für einen Benutzer bei Benutzung des Fahrzeugsitzes in einem Komfortbereich, der durch eine Kraft-Weg-Luftfederkennlinie mit sehr geringer oder keiner Steigung wiedergegeben wird, und in Hubendbereichen, die außerhalb des Komfortbereiches liegen, ermöglicht. Des Weiteren ist es Aufgabe der Erfindung ein Verfahren zur Federung des Fahrzeugsitzes mittels einer derartigen Federungsvorrichtung zur Verfügung zu stellen.

Diese Aufgabe wird vorrichtungsseitig durch die Merkmale der Patentansprüche 1 und 3 und verfahrensseitig durch die Merkmale der Patentansprüche 8 und 10 gelöst.

Bei einer Federungsvorrichtung für einen Fahrzeugsitz, insbesondere Nutzfahrzeugsitz soll mit mindestens einer zwischen einem Sitzteil und einem Unterteil angeordneter Luftfeder zur Höhenverstellung des Sitzteiles und einer Steuereinrichtung zum Steuern der Zu- und Abführung mindestens eines Zusatzvolumens zu oder von der Luftfeder zur Verfügung zu stellen, welche bei vorbestimmbaren Geschwindigkeits- oder Beschleunigungswerten einer Federbewegung der Luftfeder mittels der Steuereinrichtung das zu- oder abführbare Zusatzvolumen derart zu- oder abschaltbar sein, dass in Hubendbereichen der Luftfeder der Verlauf einer Kraft-Weg-Luftfederkennlinie während einer Ausstell- oder/und Rückstellfederbewegung der Luftfeder in einem ersten und einem zweiten Bereich keine oder nur geringe Steigung aufweist. Auf diese Weise wird in Abhängigkeit von der Schnelligkeit, mit welcher die Luftfeder aufgrund des unebenen Untergrundes, auf welchem sich das

Nutzfahrzeug, wie beispielsweise ein Traktor bewegt, ausgelenkt wird, eine Art Untergrunderkennung durchgeführt, die innerhalb der mittels des softwarefunktionierenden Steuereinrichtung einen vorbestimmbaren für den jeweiligen Untergrund vorgesehenen Ablauf des Zu- und Abführens des Zusatzvolumens aufruft. Insbesondere bei mittleren, starken und sehr starken Einleitungen der Luftfeder, also bei einer mittleren, schnellen, und sehr schnellen Veränderung des Federweges der Luftfeder und gegebenenfalls unter Hinzuziehung von Messwerten zu den Amplitudenwerten des Federweges wird das Zusatzvolumen in den Hubendbereichen derart zugeschaltet oder im Vergleich zum Komfortbereich aufrechterhalten, dass die Luftfeder gemäß der Kennlinie des Kraft-Weg-Diagramms entweder während der Auslenkung oder während ihrer Rückstellung oder während beider Bewegungen keine Kraftveränderung erfährt.

Es wird bei einem ersten mittleren Geschwindigkeits- oder Beschleunigungswert das zu- und abführbare schwingungsdämpfende Zusatzvolumen in dem ersten und dem zweiten Bereich jeweils geringer als in einem zwischen dem ersten und dem zweiten Bereich liegenden dritten Bereich, welcher den Komfortbereich darstellt, während der Ausstellfederbewegung zugeführt, oder vollständig abgeschaltet, so dass sich hierdurch ein Druckanstieg während der Auslenkung der Luftfeder in den Hubendbereichen ergibt, welcher zu einer Verkürzung des Federweges führt. Anschließend findet während der Rückstellfederbewegung eine Zuschaltung des Zusatzvolumens in Teilen oder vollständig statt, so dass sich hierdurch ein horizontal verlaufender Abschnitt innerhalb der Kraft-Weg-Luftfederkennlinie ergibt. Dies führt zu einer Rückführung der Luftfeder mit einem Zusatzvolumen von einem Wert aus einem Bereich von beispielsweise von 0,1 - 10 l und zu einer verringerten Nachschwingung.

Ab einem zweiten Geschwindigkeits- oder Beschleunigungswert, der einer starken Einleitung entspricht und somit über dem ersten Wert liegt, ist das Zusatzvolumen innerhalb des ersten und des zweiten Bereiches sowohl während der Ausstellfederbewegung als auch während der Rückstellfederbewegung zugeschaltet, woraus sich eine Art neutrale Stellung des gesamten Federungssystemes ergibt. Somit findet in den ersten und zweiten Bereichen, die die Hubendbereiche wiedergeben und außerhalb des Komfortbereiches liegen, kein Druckanstieg statt, unabhängig davon, ob die Luftfeder eine Druck- oder eine Zugbelastung erfährt, also der Fahrzeugsitz nach unten oder nach oben ausgelenkt wird. Somit fährt die Luftfeder in diesem ersten und zweiten Bereich ohne Gegenkraft auseinander und wieder zurück. Eine Nachschwingung wird verringert.

Bei einem dritten Geschwindigkeits- oder Beschleunigungswert, der einer sehr starken Einleitung entspricht und über den beiden vorherigen Werten liegt, wird das Zusatzvolumen in dem ersten und zweiten Bereich für die Ausstellbewegung jeweils größer als in dem dritten Bereich zugeführt oder vollständig zugeschaltet und während der Rückstellfederbewegung vollständig abgeschaltet bzw. mit einem geringeren Anteil als in dem dritten Bereich zugeführt. Auf diese Weise findet in den ersten und zweiten Bereichen während der Auslenkungsbewegung der Feder kein Druckanstieg statt, weshalb die Luftfeder ohne Gegenkraft auseinander- bzw. zusammenfährt. Bei Umkehr der Bewegungsrichtung, also während der Rückstellfederbewegung erfolgt bei einer Auslenkung des Fahrzeugsitzes nach oben ein Energieaufbau bzw. eine Progression und bei einer Auslenkung des Fahrzeuges nach unten einen Energieentzug bzw. eine Depression. In beiden Fällen wird die Nachschwingung sehr stark hierdurch verringert. Es findet somit eine starke Dämpfung statt.

Der dritte Bereich ist innerhalb der Kraft-Weg-Luftfederkennlinie als Komfortbereich der Federungsvorrichtung in Abhängigkeit der von weiteren Geschwindigkeits- oder Beschleunigungswerten, die unterhalb der ersten, zweiten und dritten Geschwindigkeits- oder Beschleunigungswerte liegen, und gegebenenfalls in Abhängigkeit von vorbestimmbaren Amplitudenwerten der Federbewegung unterschiedlich breit ausgebildet. Hierdurch wird aufgrund der gemessenen Geschwindigkeits- oder Beschleunigungswerte und gegebenenfalls der erfassten Auslenkungswege bzw. Amplitudenwerte, woraus sich ermitteln lässt, auf welcher Art von Untergrund sich momentan das Fahrzeug, beispielsweise ein Traktor, befindet, ein diesen Werten zugeordneter Modus innerhalb der Steuereinrichtung aufgerufen, welcher die Grenzen des Komfortbereiches festlegt. Beispielsweise werden bei Befahren einer geteerten Strasse geringe Geschwindigkeitswerte und Auslenkungswege gemessen, woraufhin der Modus "Strasse" aktiviert wird, welcher keinen Komfortbereich vorsieht, da eine ausreichend genaue mittige Sitzposition ohne größere Auslenkungswege sichergestellt ist. Weitere Moden sind "Übergang Strasse", bei dem ein Übergang von der geteerten Strasse zu einem Feldweg oder andersherum stattfindet und somit ein schmaler Komfortbereich eingerichtet ist, und der Modus "Schlechtweg/Acker etc.", in dem aufgrund der starken Einleitungen, die für größere Auslenkungswege und höhere Geschwindigkeitswerte stehen, ein breiter Komfortbereich vorhanden ist.

Gemäß einer bevorzugten Ausführungsform weist die Federungsvorrichtung mindestens ein pneumatisches Wegeventil zum Zu- oder Abführen des/der Zusatzvolumen auf.

Eine Regeleinrichtung zur selbsttätigen Höheneinstellung des Sitzteils zu Anfang eines Benutzungsvorganges durch einen Benutzer mit einem vorbestimmten Gewicht mittels einer Luftzu- oder -abführung zu der Luftfeder derart, dass sich die Luftfeder auf eine mittige Position im dritten Bereich der Kraft-Weg-Luftfederkennlinie einstellt, stellt eine Weiterbildung der Erfindung dar. Die Regeleinrichtung umfasst eine im Bereich der Armlehne des Fahrzeugsitzes angeordneten Regelschalter.

Der dritte Bereich, also der Komfortbereich, kann innerhalb der Kraft-Weg-Luftfederkennlinie mittels einer Betätigungseinrichtung durch den Benutzer und mittels der Steuereinrichtung derart verschoben werden, dass eine Einstellung des Sitzteils auf die gewünschte Höhe mit ausreichend schwingungsdämpfenden ersten und zweiten Bereichen stattfindet.

Zusätzlich kann eine Wiedererkennungseinrichtung zum Wiedererkennen eines den Fahrzeugsitz benutzenden Benutzers, insbesondere mittels seines Gewichts, angeordnet sein.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Seitenansicht einen Fahrzeugsitz mit einer Luftfe- der;
- Fig. 2: in einem Diagramm eine schematisch dargestellte Kraft-Weg- Luftfederkennlinie einer Federungsvorrichtung im Modus "Strasse";
- Fig. 3: in einem Diagramm eine schematische Darstellung der Kraft-Weg- Luftfederkennlinie der Federungsvorrichtung im Modus "Übergang Stras- se";
- Flg. 4: in einem Diagramm eine schematische Darstellung der Kraft-Weg- Luftfederkerinlinla der Federungsvorrichtung im Modus "Schlechtweg/Acker etc.";
- Fig. 5: in einem Diagramm in einer schematischen Darstellung die Kraft-Weg- Luftfederkennlinie der Federungsvorrichtung bei mittleren Geschwindigkei- ten der Federauslenkung;
- Fig. 6: in einem Diagramm eine schematische Darstellung der Kraft-Weg- Luftfederkennlinie der erfindungsgemäßen Federungsvorrichtung bei hohen Geschwindigkeiten der Federauslenkung; und
- Fig. 7: in einem Diagramm eine schematische Darstellung der Kraft-Weg- Luftfederkennlinie der erfindungsgemäßen Federungsvorrichtung bei sehr hohen Geschwindigkeiten der Federauslenkung.

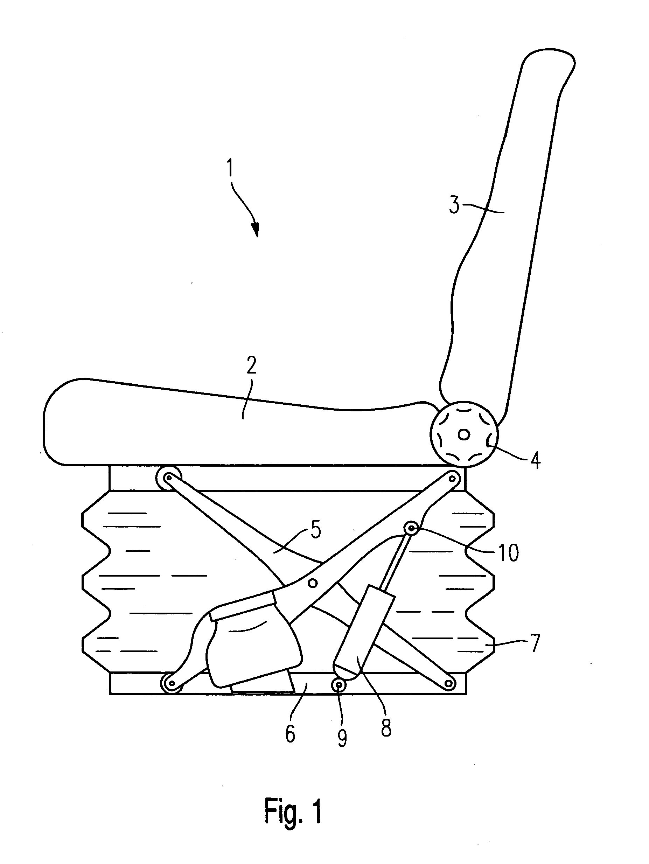

In Fig. 1 wird in einer schematischen Darstellung in Seitenansicht ein Fahrzeugsitz gezeigt. Der Fahrzeugsitz 1 besteht aus dem Sitzteil 2 und der Rückenlehne 3, die mittels einem Schwenklager 4 miteinander verbunden sind. Ein x-förmig aufgebautes höhenverstellbares Verbindungsgestell 5 ist an einem Unterteil 6, welches mit dem Fahrzeug beispielsweise mittels Führungsschienen verbunden ist, innerhalb eines balgartigen Verkleidungsteiles 7 angeordnet.

Zwischen einem Oberteil des Gestells und dem Unterteil 6 ist eine Luftfeder 8 angeordnet. Die Luftfeder 8 ist mit ihrem unteren Ende 9 mit dem Unterteil 6 und mit ihrem oberen Ende 10 mit dem Oberteil des Gestells verbunden. Die Luftfeder kann auf Zug und auf Druck beansprucht werden.

Sowohl das x-förmige Gestell als auch die Luftfeder sind derart höhenverstellbar, dass es sie bei einer Druckbelastung durch einen den Fahrzeugsitz nutzenden Fahrer oder auch durch ein Durchfahren eines Schlagloches nach unten auslenken und beispielsweise nach Durchfahren eines Schlagloches eine Auslenkung bzw. eine Schwingung nach oben erfahren.

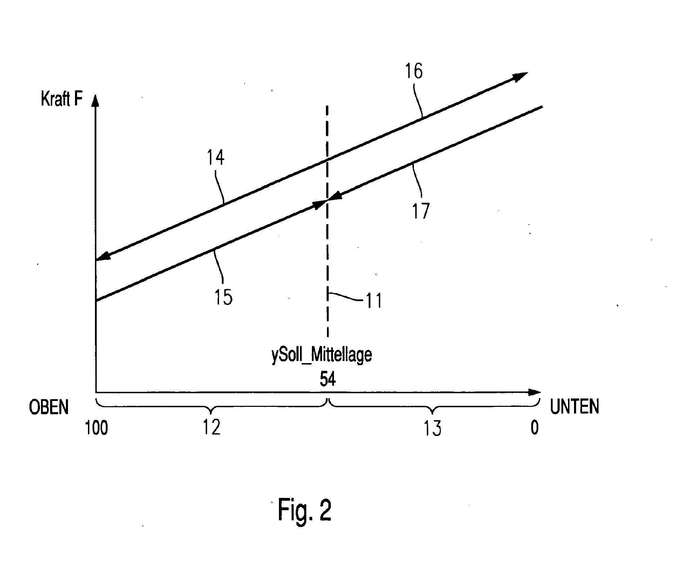

In Fig. 2 wird in einem Kraft-Weg-Luftfederkennlinien-Diagramm der Federungsvorrichtung der Modus "Strasse" wiedergegeben. Die Abszisse gibt einen Höhenverstellungsweg über 100 mm wieder. In der Mitte des Messbereiches von 100 mm ist die Soll-Mittellage 11 des Fahrzeugsitzes hinsichtlich seiner Höhe eingezeichnet.

In einem ersten Bereich 12 der Luftfederkennlinie wird die Auslenkung der Luftfeder und damit des Sitzteils 2 nach oben und in einem zweiten Bereich 13 die Auslenkung der Luftfeder und damit des Sitzteiles 2 nach unten dargestellt. Mit den helleren Pfeilen 14, 16 wird eine Ausstellfederbewegung und mit den dunkleren Pfeilen 15, 17 wird eine Rückstellfederbewegung wiedergegeben.

Bei einem gemessenen Geschwindigkeitswert von weniger als 0,114 m/s der Federauslenkung schaltet die Steuereinrichtung automatisch in den Modus "Strasse", in welchem sowohl während der Ausstellfederbewegung als auch während der Rückstellfederbewegung eine Luftfederkennlinie mit der üblichen Steigung ohne Komfortbereich durchlaufen wird. Ein Komfortbereich erübrigt sich aufgrund der stabilen Sitzposition in der Mittellage, die wegen der geringen Unebenheiten einer geteerten Strasse möglich ist.

Sofern das Sitzteil und damit die Luftfeder eine Auslenkung nach oben erfährt, wird eine Kraftreduzierung durchlaufen, wie es durch den Pfeil 14 dargestellt wird. Während der Rückstellbewegung findet die Kraftzunahme, um eine Rückkehr zur Mittellage zu ermöglichen, statt, wie es durch den Pfeil 15 wiedergegeben wird.

Bei einer Auslenkung des Sitzteils und der Luftfeder nach unten findet eine Kraftzunahme gemäß dem Pfeil 16 statt, die durch eine Kraftreduzierung während der Rückstellfederbewegung gemäß dem Pfeil 17 wieder verschwindet.

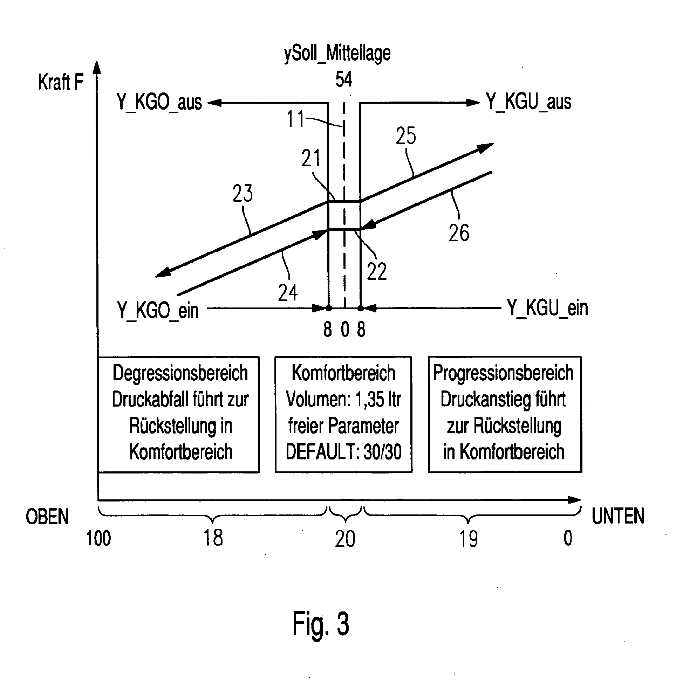

In Fig. 3 wird in einem Diagram die Kraft-Weg-Luftfederkennlinie der Federungsvorrichtung für den Modus "Übergang Strasse" dargestellt. Hierbei findet ein Übergang des Nutzfahrzeuges von der geteerten Strasse auf einen unebenen Weg, wie einen Feldweg, oder andersherum statt.

In einem ersten Bereich 18 und einem zweiten Bereich 19 sind die Luftfeder-Auslenkungen und deren Rückstellung mittels der Pfeile 23, 24 und 25, 26 wiedergegeben. Zusätzlich ist ein dritter Bereich 20 mit den Kennlinien-Abschnitten 21, 22 als schmal ausgeprägter Komfortbereich im Bereich der Mittellage 11 angeordnet, welcher durch eine Zuführung eines Zusatzvolumens von beispielsweise 1,35 1 erhalten wird.

In dem einen Degressionsbereich darstellenden ersten Bereich 18 findet ein Druckabfall bei Auslenkung (Bezugszeichen 23) statt, der zu einer Rückstellung in den Komfortbereich 20 führt. In dem einen Progressionsbereich darstellenden zweiten Bereich 19 führt ein Druckanstieg während der Auslenkung 25 zu einer Rückstellung 26 in den Komfortbereich 20.

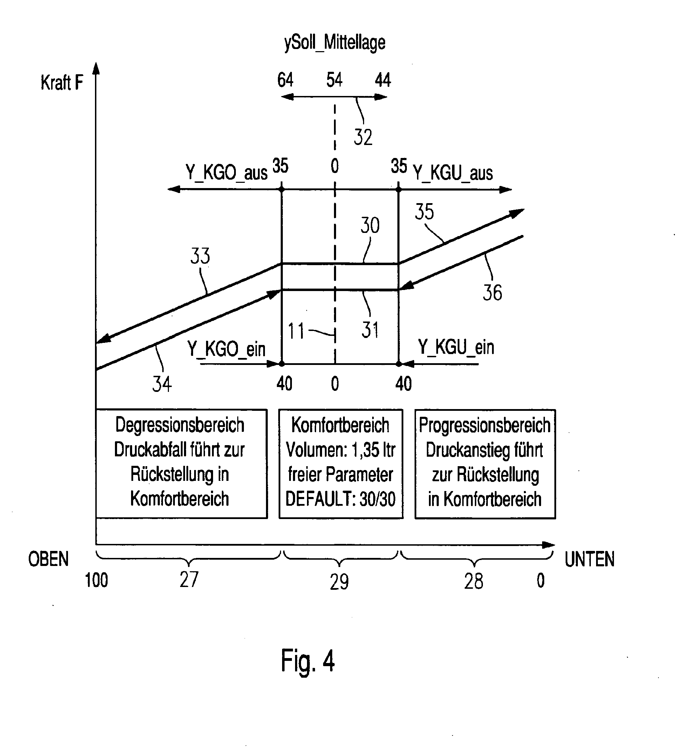

In Fig. 4 wird in einem Diagramm die Kraft-Weg-Luftfederkennlinie einer Federungsvorrichtung im Modus "Schlechtweg/Acker etc." dargestellt. Wiederum verlaufen die in einem ersten und einem zweiten Bereich 27, 28 dargestellten Ausstell- und Rückstellfederbewegungen 33, 34 und 35, 36 entlang der üblichen Steigung der Luftfederkennlinie.

In einem dritten Bereich 29 ist ein breiter Komfortbereich mit den Kennlinien-Abschnitten 30, 31 dargestellt, der aufgrund des unebenen Untergrundes, der überfahren wird, relativ breit zur Schaffung eines maximalen Komforts ausgebildet ist. Dieser Modus stellt sich bei Geschwindigkeiten der Federauslenkung von mehr als 0,114 und weniger als 0,228 m/s ein. Mit dem Bezugszeichen 32 ist schematisch der Abschnitt des Höhenverstellungsweges dargestellt, in welchem der Fahrzeugsitz mit hohem Komfort innerhalb des Komfortbereiches 29 auf- und abschwingen kann.

In dem einen Degressionsbereich darstellenden ersten Bereich 27 führt ein Druckabfall zur Rückstellung in den Komfortbereich, wohingegen in dem einen Progressionsbereich darstellenden zweiten Bereich 28 ein Druckanstieg zur Rückstellung in den Komfortbereich führt.

Eine automatische Erkennung bzw. Unterscheidung der Fahrbahnzustände gemäß den Moden, wie sie in den Figuren 2-4 dargestellt werden, kann wie folgt ablaufen:

Zu Anfang findet eine Gewichtseinstellung nach einer Neubelegung des Fahrzeugsitzes durch einen neuen Fahrer statt. Dies erfolgt automatisch, wobei sich die Federungsvorrichtung auf ein zuvor in einer vorangegangenen Nutzung des Fahrzeuges ermittelten optimierten Mittellage-Niveau einstellt. Ein kurzzeitiges Verlassen des Fahrzeugsitzes, beispielsweise über eine Zeitspanne von weniger als 8 sec., bewirkt keine Erkennung einer Unterbrechung der Sitzbelegung. Somit findet keine Neueinstellung statt. Längere Unterbrechungen, wie sie beispielsweise beim Ankuppeln eines Anhängers erforderlich sind, führen so lange nicht zu einer Neueinstellung, wie sich das Gewicht des Fahrzeugfahrers nach einer erneuten Sitzbelegung nicht ändert.

Zusätzlich ist eine anfängliche Höhenverstellung des Fahrzeugsitzes möglich, wenn keine großen Federauslenkungen vorhanden sind.

Nach der erfolgten Gewichtseinstellung und der angepassten Höhe stellt sich bei Fahrtbeginn die Federungsvorrichtung automatisch auf den Modus "Übergang Strasse" ein. Je nach Fahrbahnzustand und der daraus resultierenden Einleitungen in die Federungsvorrichtung bzw. der Federauslenkungen wird nach Auswertung von Geschwindigkeits- oder Beschleunigungswerten der Federauslenkung mittels der Steuereinrichtung der Modus "Strasse" oder "Schlechtweg/Acker etc." angewählt. Sofern keine Werte zu dem Modus "Schlechtweg/Acker etc." vorliegen, wird priorisierend der Modus "Strasse" angewählt. Dies ermöglicht ein niveau-optimiertes Sitzen hinsichtlich der optimierten Bedienung von Bremspedalen, Kuppelpedalen etc..

Bei einem Übergang von dem Modus "Schlechtweg/Acker etc." zu dem Modus "Strasse" findet dies über den Modus "Übergang Strasse" über eine Zeitspanne von ca. 10 sec. statt. Bei Verlassen der geteerten Strasse werden aufgrund der erfassten Werte für die Federauslenkung und die Geschwindigkeiten der Federauslenkung Regelparameter der Federungsvorrichtung sofort auf den Modus "Schlechtweg/Acker etc." umgestellt.

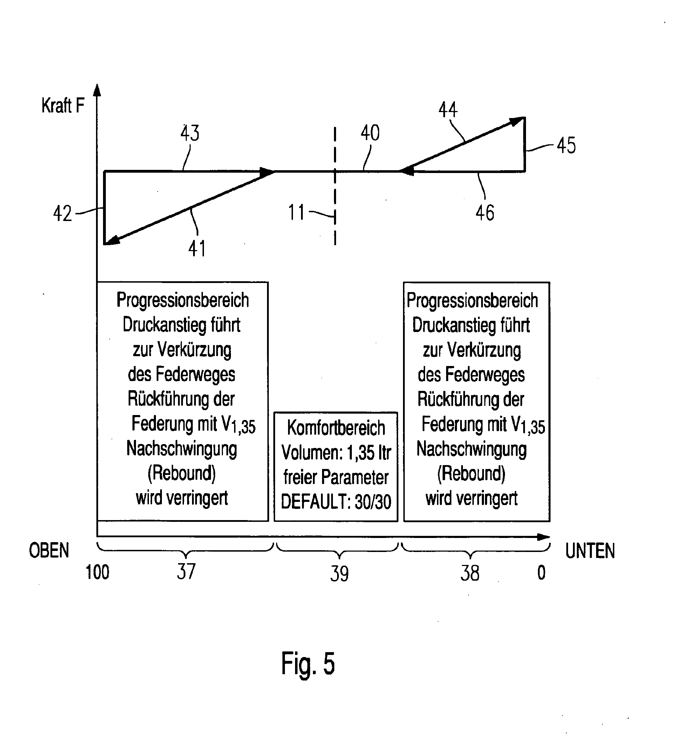

In Fig. 5 wird in einem Diagramm die Kraft-Weg-Luftfederkennlinie der Federungsvorrichtung bei mittleren Geschwindigkeiten der Federauslenkung dargestellt. Die Breite eines dritten Bereiches 39, der den Komfortbereich darstellt, entspricht der Breite des in Fig. 4 dargestellten Komfortbereiches. Dies ist auch anhand eines Kennlinien-Abschnittes 40 erkennbar.

In einem ersten Bereich 37 wird bei einer nach oben ausgerichteten Federauslenkung gemäß dem Bezugszeichen 41 zu Beginn das Zusatzvolumen abgeschaltet, woraus sich in dem hier dargestellten Progressionsbereich ein Druckanstieg ergibt, welcher zu einer Verkürzung des Federweges führt. Anschließend findet bei einer Rückstellfederbewegung während des Überganges von dem Pfeil 41 auf einen Pfeil 42, 43 die Zuschaltung des Zusatzvolumens statt, woraus sich nach der zuvor erfolgten Abbremsung während der Federausstellbewegung 41 eine Kraftzunahme gemäß dem Bezugszeichen 42 bis zum Niveau des horizontal verlaufenden Kennlinienabschnitts 40 ergibt. Anschließend wird die Luftfeder mit dem Zusatzvolumen ohne Steigung der Kennlinie zum Komfortbereich zurückgeführt (vgl. Bezugszeichen 43).

In einem zweiten Bereich 38 wird ebenso während einer Federauslenkung nach unten eine Abbremsung durch anfängliches Abschalten des Zusatzvolumens durchgeführt (Bezugszeichen 44). Anschließend findet eine Zuschaltung des Zusatzvolumens beim Übergang zu der Rückstellfederbewegung 45, 46 statt, wobei sich eine anfängliche Kraftreduzierung bis zum Niveau des horizontal verlaufenden Kennlinienabschnittes 40 ergibt und anschließend gemäß Bezugszeichen 46 eine rückführende Kennlinie ohne Steigung aufgebaut wird. Beidesmal wird eine Nachschwingung verringert.

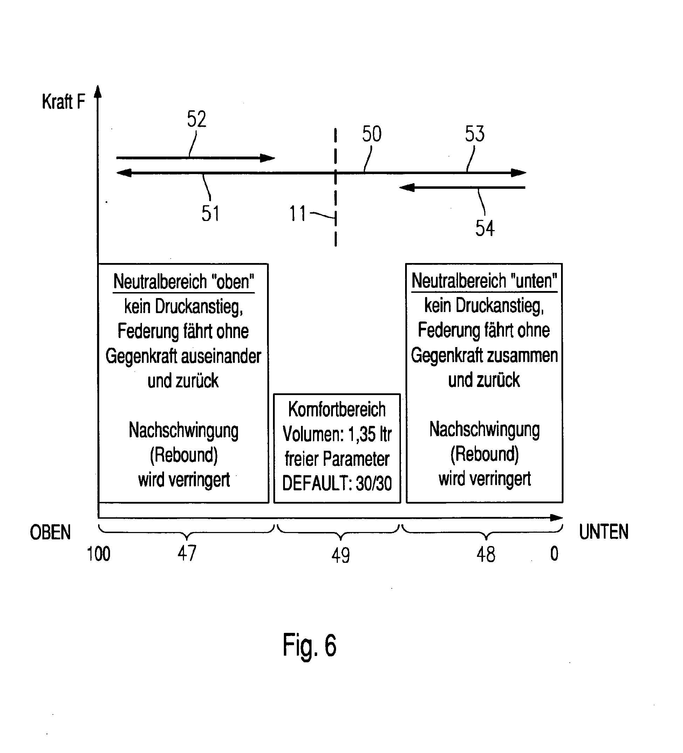

In Fig. 6 wird in einem Diagramm die Kraft-Weg-Luftfederkennlinie der Federungsvorrichtung gemäß einer erfindungsgemäßen Ausführungsform bei einer hohen Geschwindigkeit von beispielsweise mehr als 0,3185 m/s und weniger als 0,353 m/s der Federauslenkung dargestellt. Bei einer nach oben oder unten ausgerichteten Federauslenkung in diesem Geschwindigkeitsbereich wird in einem ersten und zweiten Bereich 47, 48 der Luftfederkennlinie das Zusatzvolumen bereits zu Anfang der Federauslenkung, also beim Überschreiben der Grenzen eines Komfortbereiches 49 zugeschaltet. Hierdurch ergibt sich eine in Fortsetzung zu einem Kennlinienabschnitt 50 horizontal ohne Steigung verlaufende Kennlinie 51, 52 bzw. 53, 54 während der Ausstell- und Rückstellfederbewegung.

In einem derartigen hinsichtlich des Kennlinienverlaufs neutralen ersten und zweiten Bereich findet kein Druckanstieg während der Auslenkung statt und die Federung fährt ohne Gegenkraft auseinander bzw. zusammen und zurück. Eine Nachschwingung wird weiterhin verringert.

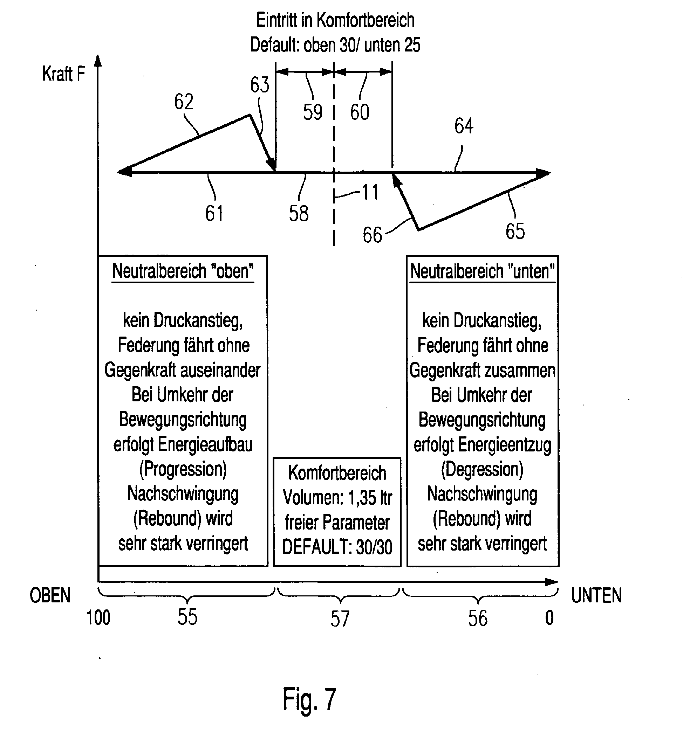

In Fig. 7 wir in einem Diagramm die Kraft-Weg-Luftfederkennlinie der Federungsvorrichtung gemäß einer weiteren erfindungsgemäßen Ausführungsform bei einer Geschwindigkeit von mehr als 0,353 m/s der Federauslenkung dargestellt. In einem ersten Bereich 55 und in einem zweiten Bereich 56 wird wiederum - ähnlich wie bei der in Fig. 6 wiedergegebenen Darstellung - bei einem Übergang aus dem dritten Bereich bzw. dem Komfortbereich 57 das Zusatzvolumen anfänglich zugeschaltet. Hierdurch ergibt sich wiederum eine Fortsetzung der bereits horizontal im Komfortbereich verlaufenden Kennlinie 58, wie es durch Kennlinienabschnitte 61, 64 wiedergegeben wird.

Im Umkehrpunkt von der Ausstellfederbewegung zu der Rückstellfederbewegung, also im Bereich der Pfeilspitze der beiden Pfeile 61, 64, wird das Zusatzvolumen abgeschaltet, woraus sich ein Kraftanstieg, bzw. eine Kraftreduzierung unter gleichzeitigem Zurücklegen eines Wegabschnittes ergibt, wie es durch die Bezugszeichen 62, 65 deutlich wird. Anschließend findet eine starke Kraftreduzierung bzw. ein starker Kraftanstieg gemäß den Bezugszeichen 63, 66 statt. Es ergibt sich demzufolge kein Druckanstieg während der Federauslenkung, wodurch die Luftfeder ohne Gegenkraft im ersten Bereich 55 auseinanderfährt und im zweiten Bereich zusammenfährt. Ab dem Umkehrpunkt der Bewegungsrichtung der Luftfeder erfolgt im ersten Bereich ein Energieaufbau (Progression) und im zweiten Bereich ein Energieentzug (Degression). Die Nachschwingung wird in beiden Fällen sehr stark verringert, woraus sich eine starke Dämpfung ergibt.

### Bezugszeichenliste

- 1: Fahrzeugsitz
- 2: Sitzteil
- 3: Rückenlehne
- 4: Schwenklager
- 5: x-förmiges Gestell
- 6: Unterteil
- 7: balgartige Verkleidung
- 8: Luftfeder
- 9: unteres Ende der Luftfeder
- 10: oberes Ende der Luftfeder
- 11: Soll-Mittellage
- 12, 18, 27, 37, 47, 55: erster Bereich der Luftfederkennlinie
- 13, 19, 28, 38, 48, 56: zweiter Bereich der Luftfederkennlinie
- 14, 23, 33, 41, 51, 61: nach oben ausgerichtete Ausstellfederbewegung
- 15, 24, 34, 42, 43, 52, 62, 63: zu der nach oben ausgerichteten Ausstellfederbewegung zugehörige Rückstellfederbewegung
- 16, 25, 35, 44, 53, 64: nach unten ausgerichtete Ausstellfederbewegung
- 17, 26, 36, 45, 46, 54, 65, 66: zu der nach unten ausgerichteten Ausstellfederbewegung zugehörige Rückstellfederbewegung
- 20, 29, 39, 49, 57: dritter Bereich der Luftfederkennlinie
- 21, 22, 30, 31, 40, 50, 58: Kennlinienabschnitt im dritten Bereich
- 32: Federauslenkung im Komfortbereich

## Patentansprüche

1. Federungsvorrichtung für einen Fahrzeugsitz (1), insbesondere Nutzfahrzeugsitz mit mindestens einer zwischen einem Sitzteil (2) und einem Unterteil (6) angeordneten Luftfeder (8) zur Höhenverstellung des Sitzteils (2) und einer Steuereinrichtung zur Steuerung der Zu- und Abführung mindestens eines Zusatzvolumens zu oder von der Luftfeder (8),
**dadurch gekennzeichnet, dass**
bei vorbestimmbaren Geschwindigkeils- oder Beschleunigungswerten einer Federbewegung der Luftfeder (8) mittels der Steuereinrichtung das zu- oder abführbare Zusatzvolumen derart zu- oder abschaltbar ist, dass in Hubendbereichen der Luftfeder (8) der Verlauf einer Kraft-Weg-Luftfederkennlinie (44-46; 50-54; 58, 61-66) während einer Ausstell- oder/und Rückstellfederbewegung der Luftfeder (8) in einem ersten und in einem zweiten Bereich (37, 38; 47, 48; 55, 56) keine Steigung aufweist, wobei bei einem zweiten Geschwindigkeits- oder Beschleunigungswert das zu- und abführbare schwingungsdämpfende Zusatzvolumen in dem ersten und dem zweiten Bereich (47, 48) der Kraft-Weg-Luftfederkennlinie (50-54) sowohl für die Ausstell- als auch für die Rückstellfederbewegung vollständig zugeschaltet ist.

2. Federungsvorrichtung nach Anspruch 1,
**dadurch gekennzeichnet, dass**
bei einem ersten Geschwindigkeits- oder Beschleunigungswert das zu- und abführbare schwingungsdämpfende Zusatzvolumen in dem ersten und zweiten Bereich (37, 38) für die Ausstellfederbewegung jeweils geringer als in einem zwischen dem ersten und zweiten Bereich (37, 38) liegenden dritten Bereich (39) der Kraft-Weg-Luftfederkennlinie (40-46) oder vollständig abgeschaltet und für die Rückstellfederbewegung jeweils größer als in dem dritten Bereich (39) oder vollständig zugeschaltet ist.

3. Federungsvorrichtung für einen Fahrzeugsitz (1), insbesondere Nutzfahrzeugsitz mit oil mindestens einer zwischen einem Sitzteil (2) und einem Unterteil (6) angeordneten Luftfeder (8) zur Höhenverstellung des Sitzteils (2) und einer Steuereinrichtung zur Steuerung der Zu- und Abführung mindestens eines Zusatzvolumens zu oder von der Luftfeder (8),
**dadurch gekennzeichnet, dass**
bei vorbestimmbaren Geschwindigkeits- oder Beschleunigungswerten einer Federbewegung der Luftfeder (8) mittels der Steuereinrichtung das zu- oder abführbare Zusatzvolumen derart zu- oder abschaltbar ist, dass in Hubendbereichen der Luftfeder (8) der Verlauf einer Kraft-Weg-Luftfederkennlinie (44-46; 50-54; 58, 61-66) während einer Ausstell- oder/und Rückstellfederbewegung der Luftfeder (8) in einem ersten und in einem zweiten Bereich (37, 38; 47, 48; 55, 56) keine Steigung aufweist, wobei bei einem dritten Geschwindigkeits- oder Beschleunigungswert das zu- und abführbare schwingungsdämpfende Zusatzvolumen in dem ersten und dem zweiten Bereich (55, 56) für die Ausstellfederbewegung jeweils größer als in einem zwischen dem ersten und dem zweiten Bereich (55, 56) liegenden dritten Bereich (57) der Kraft-Weg-Luftfederkennlinie (58, 61-66) oder vollständig zugeschaltet und für die Rückstellfederbewegung jeweils geringer als in dem dritten Bereich (57) oder vollständig abgeschaltet ist.

4. Federungsvorrichtung nach einem der Ansprüche 1-3,
**dadurch gekennzeichnet, dass**
der dritte Bereich (39, 49, 57) innerhalb der Kraft-Weg-Luftfederkennlinie (40-46; 50-54; 58, 61-66) als Komfortbereich der Federungsvorrichtung in Abhängigkeit von weiteren Geschwindigkeits- oder Beschleunigungswerten, die unterhalb der ersten, zweiten und dritten Geschwindigkeits- oder Beschleunigungswerte liegen, und in Abhängigkeit von vorbestimmbaren Amplitudenwerten der Federbewegung unterschiedlich breit ausgebildet ist.

5. Federungsvorrichtung nach einem der vorangegangenen Ansprüche,
**gekennzeichnet durch**
eine Regeleinrichtung zur selbsttätigen Höheneinstellung des Sitzteils zu Anfang eines Benutzungsvorganges **durch** einen Benutzer mit einem vorbestimmten Gewicht mittels einer Luftzu- oder -abführung zu der Luftfeder (8) derart, dass sich die Luftfeder (8) auf eine mittige Position (11) im dritten Bereich (39; 49; 57) der Kraft-Weg-Luftfederkennlinie (40-46; 50-54; 58, 61-66) einstellt.

6. Federungsvorrichtung nach Anspruch 5,
**dadurch gekennzeichnet, dass**
die erste Regeleinrichtung einen im Bereich der Armlehne des Fahrzeugsitzes angeordneten Regelschalter umfasst.

7. Federungsvorrichtung nach einem der vorangegangenen Ansprüche,
**dadurch gekennzeichnet, dass**
der dritte Bereich (39; 49; 57) innerhalb der Kraft-Weg-Luftfederkennlinie (40-46; 50-54; 58, 61-66) mittels einer Betätigungseinrichtung durch den Benutzer und mittels der Steuereinrichtung derart verschoben werden kann, dass eine Einstellung des Sitzteils auf die gewünschte Höhe mit ausreichend schwingungsdämpfenden ersten und zweiten Bereichen (37, 38; 47, 48; 55, 56) stattfindet.

8. Verfahren zur Federung eines Fahrzeugsitzes, insbesondere Nutzfahrzeugsitzes mit mindestens einer zwischen einem Sitz (2) und einem Unterteil (6) angeordnete Luftfeder (8) zur Höhenverstellung des Sitzteils (2) und einer Steuereinrichtung zur Steuerung der Zu- und Abführung mindestens eines Zusatzvolumens zu oder von der Luftfeder (8),
**dadurch gekennzeichnet, dass**
das zu- oder abführbare Zusatzvolumen mittels der Steuereinrichtung verändert, abgeschaltet oder zugeschaltet wird, wenn die Luftfeder (8) in ihrer Federbewegung vorbestimmte Geschwindigkeits- oder Beschleunigungswerte überschreitet, um eine Steigung bzw. ein Gefälle des Verlaufs einer Kraft-Weg-Luftfederkennlinie für Hubendbereiche der Luftfeder bei einer Ausstell- oder/und Rückstellfederbewegung in ersten und zweiten Bereichen (37, 38; 47, 48; 55, 56) zu vermeiden, dass das Zusatzvolumen bei einem zweiten Geschwindigkeits- oder Beschleunigungswert während der Ausstellfederbewegung zugeschaltet wird oder zugeschaltet bleibt und während der Rückstellfederbewegung zugeschaltet bleibt.

9. Verfahren nach Anspruch 8,
**dadurch gekennzeichnet, dass**
das Zusatzvolumen bei einem ersten Geschwindigkeits- oder Beschleunigungswert während der Ausstellfederbewegung abgeschaltet und während der Rückstellfederbewegung zugeschaltet wird.

10. Verfahren zur Federung eines Fahrzeugsitzes, insbesondere Nutzfahrzeugsitzes mit mindestens einer zwischen einem Sitz (2) und einem Unterteil (6) angeordnete Luftfeder (8) zur Höhenverstellung des Sitzteils (2) und einer Steuereinrichtung zur Steuerung der Zu- und Abführung mindestens eines Zusatzvolumens zu oder von der Luftfeder (8),
**dadurch gekennzeichnet, dass**
das zu- oder abführbare Zusatzvolumen mittels der Steuereinrichtung verändert, abgeschaltet oder zugeschaltet wird, wenn die Luftfeder (8) in ihrer Federbewegung vorbestimmte Geschwindigkeits- oder Beschleunigungswerte überschreitet, um eine Steigung bzw. ein Gefälle des Verlaufs einer Kraft-Weg-Luftfederkennlinie für Hubendbereiche der Luftfeder bei einer Ausstell- oder/und Rückstellfederbewegung in ersten und zweiten Bereichen (37, 38; 47, 48; 55, 56) zu vermeiden, wobei das Zusatzvolumen bei einem dritten Geschwindigkeits- oder Beschleunigungswert während der Ausstellfederbewegung zugeschaltet wird oder zugeschaltet bleibt und während der Rückstellfederbewegung abgeschaltet wird.

## Claims

1. Suspension device for a vehicle seat (1), in particular a utility vehicle seat, comprising at least one air spring (8) for height adjustment of a seat part (2), said air spring being arranged between the seat part (2) and a lower part (6), and a control device for controlling the supply and discharge of at least one additional volume to or from the air spring (8), **characterized in that**, at predefinable speed or acceleration values of a spring movement of the air spring (8), the additional volume which can be supplied or discharged can be switched on or off by means of the control device in such a way that, in end-of-travel regions of the air spring (8), the profile of a force/travel air spring characteristic (44-46; 50-54; 58, 61-66) during an extension and/or return spring movement of the air spring (8) does not exhibit any incline in a first and in a second range (37, 38; 47, 48; 55, 56), wherein at a second speed or acceleration value, the vibration-damping additional volume which can be supplied and discharged in the first and second range (47, 48) of the force/travel air spring characteristic (50-54) is fully switched on both for the extension spring movement and for the return spring movement.

2. Suspension device according to claim 1, **characterized in that**, at a first speed or acceleration value, the vibration-damping additional volume which can be supplied and discharged in the first and second range (37, 38) for the extension spring movement is in each case smaller than in a third range (39) of the force/travel air spring characteristic (40-46) which lies between the first and second range (40-46), or is fully switched off, and for the return spring movement is in each case greater than in the third range (39) or is fully switched on.

3. Suspension device for a vehicle seat (1), in particular a utility vehicle seat, comprising at least one air spring (8) for height adjustment of a seat part (2), said air spring being arranged between the seat part (2) and a lower part (6), and a control device for controlling the supply and discharge of at least one additional volume to or from the air spring (8), **characterized in that**, at predefinable speed or acceleration values of a spring movement of the air spring (8), the additional volume which can be supplied or discharged can be switched on or off by means of the control device in such a way that, in end-of-travel regions of the air spring (8), the profile of a force/travel air spring characteristic (44-46; 50-54; 58, 61-66) during an extension and/or return spring movement of the air spring (8) does not exhibit any incline in a first and in a second range (37, 38; 47, 48; 55, 56), wherein at a third speed or acceleration value, the vibration-damping additional volume which can be supplied and discharged in the first and second range (55, 56) for the extension spring movement is in each case greater than in a third range (57) of the force/travel air spring characteristic (58, 61-66) which lies between the first and second range (55, 56), or is fully switched on, and for the return spring movement is in each case smaller than in the third range (57) or is fully switched off.

4. Suspension device according to any of Claims 1-3, **characterized in that** the third range (39, 49, 57) within the force/travel air spring characteristic (40-46; 50-54; 58, 61-66), as the comfort range of the suspension device, is designed to have a variable width depending on further speed or acceleration values, which lie below the first, second and third speed or acceleration values, and depending on predefinable amplitude values of the spring movement.

5. Suspension device according to any of the preceding claims, **characterized by** an adjustment device for automatic height adjustment of the seat part at the start of a use operation by a user having a predefined weight by means of air being supplied to or discharged from the air spring (8) in such a way that the air spring (8) adjusts to a central position (11) in the third range (39; 49; 57) of the force/travel air spring characteristic (40-46; 50-54; 58, 61-66).

6. Suspension device according to Claim 5, **characterized in that** the first adjustment device comprises a regulator switch which is arranged in the region of the armrest of the vehicle seat.

7. Suspension device according to any of the preceding claims, **characterized in that** the third range (39; 49; 57) can be displaced within the force/travel air spring characteristic (40-46; 50-54; 58, 61-66) by means of an operating device by the user and by means of the control device in such a way that the seat part is adjusted to the desired height with sufficiently vibration-damping first and second ranges (37, 38; 47, 48; 55, 56).

8. Method for suspension of a vehicle seat, in particular a utility vehicle seat, comprising at least one air spring (8) for height adjustment of a seat part (2), said air spring being arranged between the seat part (2) and a lower part (6), and a control device for controlling the supply and discharge of at least one additional volume to or from the air spring (8), **characterized in that** the additional volume which can be supplied or discharged is changed, switched off or switched on by means of the control device when the air spring (8) exceeds predefined speed or acceleration values in its spring movement, in order to prevent any incline or drop in the profile of a force/travel air spring characteristic for end-of-travel regions of the air spring during an extension and/or return spring movement in first and second ranges (37, 38; 47, 48; 55, 56), that at a second speed or acceleration value, the additional volume is switched on or remains switched on during the extension spring movement and remains switched on during the return spring movement.

9. Method according to Claim 8, **characterized in that**, at a first speed or acceleration value, the additional volume is switched off during the extension spring movement and switched on during the return spring movement.

10. Method for suspension of a vehicle seat, in particular a utility vehicle seat, comprising at least one air spring (8) for height adjustment of a seat part (2), said air spring being arranged between the seat part (2) and a lower part (6), and a control device for controlling the supply and discharge of at least one additional volume to or from the air spring (8), **characterized in that** the additional volume which can be supplied or discharged is changed, switched off or switched on by means of the control device when the air spring (8) exceeds predefined speed or acceleration values in its spring movement, in order to prevent any incline or drop in the profile of a force/travel air spring characteristic for end-of-travel regions of the air spring during an extension or/and return spring movement in first and second ranges (37, 38; 47, 48; 55, 56, wherein at a third speed or acceleration value, the additional volume is switched on or remains switched on during the extension spring movement and is switched off during the return spring movement.

## Revendications

1. Dispositif de suspension pour un siège de véhicule (1), en particulier un siège de véhicule utilitaire comportant au moins un ressort pneumatique (8) agencé entre une partie de siège (2) et une partie inférieure (6) pour régler la hauteur de la partie de siège (2), et un dispositif de commande pour la commande de l'amenée et de l'évacuation d'au moins un volume supplémentaire en direction du ressort pneumatique (8) ou à partir de celui-ci,
**caractérisé en ce que**
pour des valeurs de vitesse ou d'accélération prédéfnissables d'un mouvement du ressort pneumatique (8), le volume supplémentaire pouvant être amené ou évacué est activable ou désactivable au moyen du dispositif de commande de telle sorte que, dans les zones de fin de course du ressort pneumatique (8), l'allure d'une courbe caractéristique de ressort pneumatique force-déplacement (44 à 46 ; 50 à 54 ; 58, 61 à 66) ne présente aucune pente ascendante pendant un mouvement d'extension ou/et de rappel du ressort pneumatique (8) dans une première et dans une deuxième zone (37, 38 ; 47, 48 ; 55, 56), dans lequel pour une deuxième valeur de vitesse ou d'accélération, le volume supplémentaire, amortisseur de vibrations et pouvant être amené et évacué dans la première zone et la deuxième zone (47, 48) de la courbe caractéristique de ressort pneumatique force-déplacement (50 à 54) est entièrement activé à la fois pour le mouvement d'extension et pour le mouvement de rappel du ressort.

2. Dispositif de suspension selon la revendication 1,
**caractérisé en ce que**
à une première valeur de vitesse ou d'accélération, le volume supplémentaire, amortisseur de vibrations et pouvant être amené et évacué dans la première et la deuxième zone (37, 38), pour le mouvement d'extension est respectivement désactivé plus faiblement que dans une troisième zone (39) de la courbe caractéristique de ressort pneumatique force-déplacement (40 à 46) se situant entre la première et la deuxième zone (37, 38) ou entièrement désactivée et pour le mouvement de rappel respectivement activé plus fortement que dans la troisième zone (39) ou bien entièrement activé.

3. Dispositif de suspension pour une siège de véhicule (1), en particulier un siège de véhicule utilitaire comportant au moins un ressort pneumatique (8) agencé entre une partie de siège (2) et une partie inférieure (6) pour régler la hauteur de la partie de siège (2), et un dispositif de commande pour la commande de l'amenée et de l'évacuation d'au moins un volume supplémentaire en direction du ressort pneumatique (8) ou à partir de celui-ci,
**caractérisé en ce que**
pour des valeurs de vitesse ou d'accélération prédéfinissables d'un mouvement du ressort pneumatique (8), le volume supplémentaire pouvant être amené ou évacué est activable ou désactivable au moyen du dispositif de commande de telle sorte que, dans les zones de fin de course du ressort pneumatique (8), l'allure d'une courbe caractéristique de ressort pneumatique force-déplacement (44 à 46 ; 50 à 54 ; 58, 61 à 66) ne présente aucune pente ascendante pendant un mouvement d'extension ou/et de rappel du ressort pneumatique (8) dans une première et dans une deuxième zone (37, 38 ; 47, 48 ; 55, 56), dans lequel pour une troisième valeur de vitesse ou d'accélération, le volume supplémentaire, amortisseur de vibrations et pouvant être amené et évacué dans la première et la deuxième zone (55, 56), pour le mouvement d'extension est respectivement activé plus fortement que dans une troisième zone (57) se situant entre la première et la deuxième zone (55, 56) de la courbe caractéristique de ressort pneumatique force-déplacement (58, 61a 66) ou entièrement activé, et pour le mouvement de rappel est respectivement désactivé plus faiblement que dans la troisième zone (57) ou entièrement désactivé.

4. Dispositif de suspension selon l'une quelconque des revendications 1 à 3,
**caractérisé en ce que**
la troisième zone (39, 49, 57) à l'intérieur de la courbe caractéristique de ressort pneumatique force-déplacement (40 à 46 ; 50 à 54 ; 58, 61 à 66), est formée en tant que zone de confort, d'une largeur différente, du dispositif de suspension, en fonction d'autres valeurs de vitesse ou d'accélération qui sont inférieures à la premières, la deuxième et la troisième valeur de vitesse ou d'accélération, et en fonction de valeurs d'amplitude prédéfinissables du mouvement du ressort.

5. Dispositif de suspension selon l'une quelconque des revendications précédentes,
**caractérisé par**
un dispositif de réglage pour l'ajustage automatique de la hauteur de la partie de siège au début d'un processus d'utilisation par un usager avec un poids prédéterminé, au moyen d'une amenée ou d'une évacuation d'air vers le ressort pneumatique (8) de telle sorte que le ressort pneumatique (8) se règle sur une position centrale (11) dans la troisième zone (39 ; 49 ; 57) de la courbe caractéristique de ressort pneumatique force-déplacement (40 à 46 ; 50 à 54 ; 58, 61 à 66).

6. Dispositif de suspension selon la revendication 5,
**caractérisé en ce que**
le premier dispositif de réglage comprend un commutateur de réglage agencé dans la zone de l'accoudoir du siège de véhicule.

7. Dispositif de suspension selon l'une quelconque des revendications précédentes,
**caractérisé en ce que**
la troisième zone (39 ; 49 ; 57) peut être déplacée à l'intérieur de la courbe caractéristique de ressort pneumatique force-déplacement (40 à 46 ; 50 à 54 ; 58, 61 à 66) par l'usager au moyen d'un dispositif d'actionnement, et au moyen du dispositif de commande de telle sorte qu'un réglage de la partie de siège à la hauteur désirée a lieu avec une première et une deuxième zone (37, 38 ; 47, 48 ; 55, 56) amortissant suffisamment les vibrations.

8. Procédé destiné à la suspension d'un siège de véhicule, en particulier d'un siège de véhicule utilitaire comportant au moins un ressort pneumatique (8) agencé entre une partie de siège (2) et une partie inférieure (6) pour régler la hauteur de la partie de siège (2), et un dispositif de commande pour la commande de l'amenée et de l'évacuation d'au moins un volume supplémentaire en direction du ressort pneumatique (8) ou à partir de celui-ci,
**caractérisé en ce que**
le volume supplémentaire pouvant être amené ou évacué est modifié, désactivé ou activé au moyen du dispositif de commande lorsque, dans son mouvement le ressort pneumatique (8) dépasse des valeurs de vitesse ou d'accélération prédéfinies afin d'éviter une pente ascendante ou descendante de l'allure d'une courbe caractéristique de ressort pneumatique force-déplacement pour les zones de fin de course du ressort pneumatique lors d'un mouvement d'extension ou/et de rappel dans des premières et deuxièmes zones (37, 38 ; 47, 48 ; 55, 56), et **en ce que** le volume supplémentaire est activé ou reste activé pour une deuxième valeur de vitesse ou d'accélération pendant le mouvement d'extension, et reste activé pendant le mouvement de rappel.

9. Procédé selon la revendication 8,
**caractérisé en ce que**
le volume supplémentaire est désactivé pour une première valeur de vitesse ou d'accélération pendant le mouvement d'extension, et activé pendant le mouvement de rappel.

10. Procédé destiné à la suspension d'un siège de véhicule, en particulier d'un siège de véhicule utilitaire comportant au moins un ressort pneumatique (8) agencé entre une partie de siège (2) et une partie inférieure (6) pour régler la hauteur de la partie de siège (2), et un dispositif de commande pour la commande de l'amenée et de l'évacuation d'au moins un volume supplémentaire en direction du ressort pneumatique (8) ou à partir de celui-ci,
**caractérisé en ce que**
le volume supplémentaire pouvant être amené ou évacué est modifié, désactivé ou activé au moyen du dispositif de commande lorsque, dans son mouvement le ressort pneumatique (8) dépasse des valeurs de vitesse ou d'accélération prédéfinies afin d'éviter une pente ascendante ou descendante de l'allure d'une courbe caractéristique de ressort pneumatique force-déplacement pour les zones de fin de course du ressort pneumatique lors d'un mouvement d'extension ou/et de rappel dans des premières et deuxièmes zones (37, 38 ; 47, 48; 55, 56), dans lequel le volume supplémentaire est activé ou reste activé pour une troisième valeur de vitesse ou d'accélération pendant le mouvement d'extension, et est désactivé pendant le mouvement de rappel.
